# EUROPEAN PATENT SPECIFICATION

(11) **EP 2 941 035 B1**
(45) Date of publication and mention of the grant of the patent: **24.10.2018**
(21) Application number: 15165511.5
(22) Date of filing: 28.04.2015
(51) Int. Cl.: H04W 16/22, H04W 64/00, G01S 5/02, H04W 24/08

(54) **METHOD AND APPARATUS FOR GEOLOCATION OF A WIRELESS COMMUNICATION SUBSCRIBER UNIT**
VERFAHREN UND VORRICHTUNG ZUR GEOLOKALISIERUNG EINER DRAHTLOSEN TEILNEHMERSTATION
PROCÉDÉ ET APPAREIL PERMETTANT LA GEOLOCALISATION D'UNE STATION D'ABONNE SANS FIL

(30) Priority: 28.04.2014 US 201414263739
(43) Date of publication of application: 04.11.2015
(73) Proprietor: Viavi Solutions UK Limited, Newbury, Berkshire RG14 2PZ (GB)
(72) Inventor: Kenington, Peter, Chepstow, NP16 6PE (GB); Thiel, Stefan Ulrich, Newbury, RG14 2HQ (GB); Smith, Gareth James, Newbury, RG14 5SP (GB); Flanagan, Michael Joseph, Chester, NJ New Jersey 07930 (US)
(74) Representative: Murgitroyd & Company

(56) References cited:
- Rafael Saraiva Campos ET AL: "RF Fingerprinting Location Techniques" In: "Handbook of Position Location", 16 September 2011 (2011-09-16), John Wiley & Sons, Inc., Hoboken, NJ, USA, XP55114167, ISBN: 978-0-47-094342-7 pages 487-520, DOI: 10.1002/9781118104750.ch15, * paragraph [15.2] * * paragraph [15.4.2] * * paragraph [15.5] *
- KRISHNA CHINTALAPUDI ET AL: "Indoor localization without the pain", PROCEEDINGS OF THE SIXTEENTH ANNUAL INTERNATIONAL CONFERENCE ON MOBILE COMPUTING AND NETWORKING, MOBICOM '10, ACM PRESS, NEW YORK, NEW YORK, USA, 20 September 2010 (2010-09-20), pages 173-184, XP058230053, DOI: 10.1145/1859995.1860016 ISBN: 978-1-4503-0181-7

## Description

### Field of the invention

The field of the invention relates to methods and apparatus for geolocalizing wireless communication subscriber units.

### Background of the Invention

Wireless communication networks, such as the 3^{rd} Generation (3G) and 4^{th} Generation (4G) of wireless telephone standards and technology, are well known. Examples of such 3G and 4G standards and technology are the Universal Wireless Telecommunications System (UMTS™) and the Long Term Evolution (LTE) respectively, developed by the 3^{rd} Generation Partnership Project (3GPP™) (www.3gpp.org).

These 3^{rd} and 4^{th} generations of wireless communications, have generally been developed to support macro-cell wireless phone communications, and more recently femto-cell wireless phone communications. Here the "phone" may be a smart phone, or another wireless or portable communication unit that is linked wirelessly to a network through which calls etc. are connected. Henceforth all these devices will be referred to as wireless communication units. Calls may be data, video, or voice calls, or a combination of these.

Typically, wireless communication units, or User Equipment (UE) as they are often referred to in 3G parlance, communicate with a Core Network of the 3G or 4G wireless communication network. This communication is via a Radio Network Subsystem. A wireless communication network typically comprises a plurality of Radio Network Subsystems. Each Radio Network Subsystem comprises one or more cells, to which wireless communication units may attach, and thereby connect to the network. A base station may serve a cell. Each base station may have multiple antennas, each of which serves one sector of the cell.

Geolocation is the real-world geographical location of objects, and geolocation of wireless communication units is an increasingly important and desirable service. There are many mechanisms by which users of a wireless communication network may be located, whilst they are using the system. These include use of the global positioning system (GPS), if the wireless device is equipped with a GPS receiver and the user has enabled this on his/her device. However, many users do not enable GPS on their devices as it is typically a significant power drain on the device's battery.

Alternative known techniques for geo-locating a wireless communication unit within a wireless communication network use timing information. Wireless communication networks fall into two broad categories:
(i) Synchronous networks, such as Code Division Multiple Access systems, e.g. CDMA 2000. In synchronous networks, the timing offset between different base stations is constant. The amount of the offset is known to wireless mobile communication units that are using the network. In the example of CDMA2000, the timing offset is both known and constant, because each base station's timing is locked to a Global Positioning System satellite.
(ii) Asynchronous networks, such as the Universal Mobile Telephone System (UMTS). In asynchronous networks, the timing offset between different base stations is not constant. Wireless mobile communication units in asynchronous networks are not provided with information about the timing offset between base station timing references. In addition, these references drift over time, relative both to absolute timing references, as well as to each other.

In a synchronous wireless communication network, the known timing offset information makes it relatively straight forward to derive a measurement of the location of a wireless communication unit from signal timing information. However, in an asynchronous network, it is much more difficult to derive a measurement of the location of a wireless communication unit from signal timing information.

Furthermore, although LTE networks comprise synchronous networks, not every LTE network reports timing advance/offset information, and without this information the accurate judgement of distance from a cell site can be difficult. It is therefore necessary/desirable to utilise alternative geolocation techniques within LTE (and asynchronous) networks.

Alternative known techniques for geo-locating a wireless communication unit within a wireless communication network use signal strength measurements for cells visible to the wireless communication to determine the approximate distance of the wireless communication unit from the respective basestation for each of the cells. This distance information may then be used in conjunction with the known location for the basestations to estimate the location of the wireless communication unit.

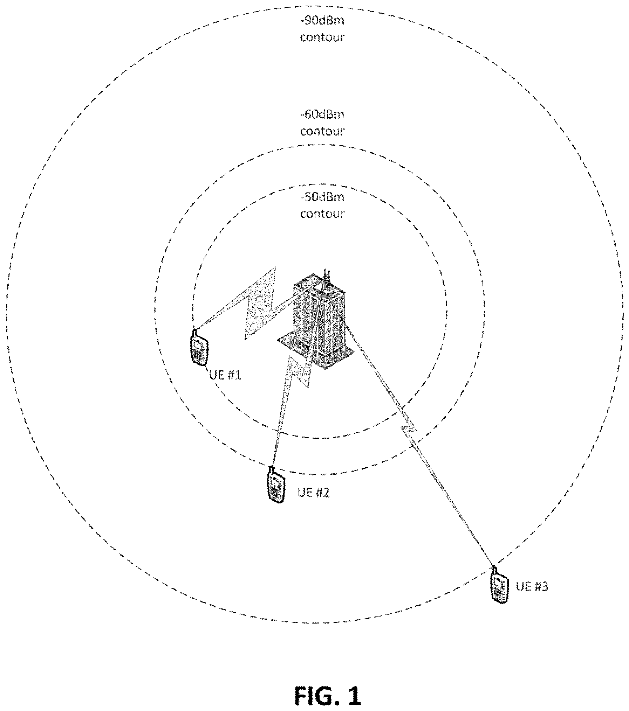

Figure 1 illustrates the decay of signal strength with increasing distance from a basestation site. The rate of decay varies depending upon the environment in which the basestation is placed. For example, in a city with many structures to attenuate the signal, the rate of decay of signal strength with distance will typically be relatively high, perhaps decaying at a rate proportional to 1/r⁴, where r is the radial distance from the basestation site. Conversely, in the countryside where there are fewer structures etc. to attenuate the signal, the rate of decay of signal strength with distance will typically be lower than in a city, for example reduced to a rate proportional to 1/r².

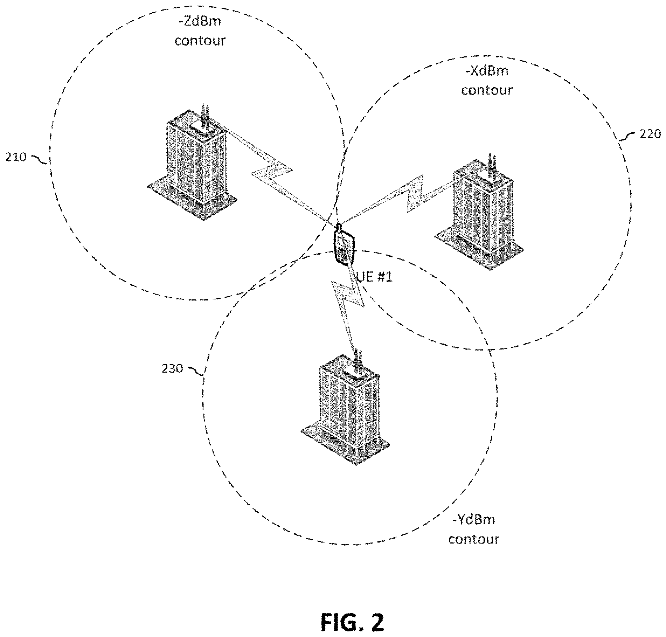

Whilst these general values for signal strength decay rates may be used as a guide or a starting point for estimating the distance between a wireless communication unit and a basestation site, they will typically vary significantly from site to site, even within a given (e.g. urban) environment. Clearly, if this variation is known accurately for a given base-station, at a given receive location, then it is possible to utilise signal strength alone (e.g. in the absence of timing information etc.) to provide a distance estimate between a wireless communication unit and a basestation site. If accurate distance estimates can be determined for a number of cell sites (e.g. a minimum of three), the intersection of signal strength contours (defined by the distance estimates) can be used to determine the likely location of the wireless communication unit. This situation is shown in Figure 2. In practice, using a larger number of cell sites is beneficial, since this provides a greater number of sample points and minimises the impact of a gross error arising from measurements based on a particular cell-site.

In Figure 2, three contours are shown 210, 220, 230, one for each of the three base-stations. In a perfect system, with perfectly circular contours (as shown), the intersection of the contours 210, 220, 230 at a single point would provide a precise location. In a real scenario, however, the modelled signal strength contours will be far from accurate and the measured vs modelled values will lead to a gap (as shown), within which the wireless communication unit is likely to be located. So long as this 'gap' is sufficiently small, a sufficiently accurate location estimate may be obtained.

The document KRISHNA CHINTALAPUDI ET AL: "Indoor localization without the pain", PROCEEDINGS OF THE SIXTEENTH ANNUAL INTERNATIONAL CONFERENCE ON MOBILE COMPUTING AND NETWORKING, MOBICOM '10, ACM PRESS, NEW YORK, USA, 20 September 2010 (2010-09-20), pages 173-184, DOI: 10.1145/1859995.1860016 ISBN: 978-1-4503-0181-7 discloses the minimization of a cost function representing an error in the localization. The genetic algorithms (GA) are used to simplify the computational issue in the minimization.

Thus, there is a need for a method and apparatus for enabling signal strength contours for cells within wireless communication networks to be accurately. Any occurrence of the term "embodiment" in the description has to be considered as an "aspect of the invention", the invention being defined only in the appended independent claims.

### Summary of the Invention

Accordingly, the invention seeks to mitigate, alleviate or eliminate one or more of the abovementioned disadvantages singly or in any combination.

According to a first aspect of the present invention, there is provided a method of deriving signal strength attenuation characteristic values for cells within a wireless communication network. The method comprises determining a set of cells for which signal strength attenuation characteristic values are to be derived, and using a genetic algorithm to derive signal strength attenuation characteristic values for the set of cells based at least partly on signal strength information for signal strength measurements obtained by wireless communication subscriber units within the wireless communication network.

In this manner, signal strength attenuation characteristic information may be derived on a per cell basis from signal strength measurement information provided by wireless communication units, enabling signal strength contours for cells within wireless communication networks to be accurately modelled.

In some optional embodiments, the method may comprise:
- determining a set of cells for which signal strength attenuation characteristic values are to be derived;
- generating a first generation of chromosome strings, each chromosome string comprising at least one signal strength attenuation characteristic value for each cell within the determined set of cells;
- calculating a fitness score for each chromosome string within the first generation of chromosome strings based at least partly on signal strength information for signal strength measurements obtained by wireless communication subscriber units within the wireless communication network;
- generating at least one further generation of chromosome strings;
- calculating a fitness score for each chromosome string within the at least one further generation of chromosome strings based at least partly on signal strength information for signal strength measurements obtained by wireless communication subscriber units within the wireless communication network; and
- deriving signal strength attenuation characteristic values for the set of cells based at least partly on the calculated fitness scores for the first and at least one further generation of chromosome strings.

In some optional embodiments, the first generation of chromosome strings may comprise random signal strength attenuation characteristic values.

In some optional embodiments, calculating a fitness score for a chromosome string may comprise:
- defining a plurality of signature points, each signature point representing a geographical location;
- calculating an expected signal strength measurement value for at least one cell at each signature point;
- matching each of a plurality of signal strength measurement reports received from wireless communication subscriber units to one of the signature points based at least partly on the expected signal strength measurement values for the signature points;
- calculating a fitness score for each signal strength measurement report based at least partly on the or each expected signal strength measurement value for the respective signature point and corresponding signal strength information from the signal strength measurement report; and
- calculating the fitness score for the chromosome string based at least partly on the calculated fitness scores for the plurality of signal strength measurement reports.

In some optional embodiments, the method may comprise calculating the fitness scores for the chromosome string by summing the fitness scores for the signal strength measurement reports.

In some optional embodiments, generating at least one further generation of chromosome strings may comprise:
- deriving parent chromosome strings to form part of the at least one further generation of chromosome strings; and
- performing a crossover between parent chromosome strings to generate child chromosome strings to form part of the at least one further generation of chromosome strings.

In some optional embodiments, generating at least one further generation of chromosome strings may further comprise performing mutation of the child chromosome strings.

In some optional embodiments, generating at least one further generation of chromosome strings may comprise identifying at least one chromosome string from a current generation of chromosome strings comprising a highest fitness score and including the identified at least one chromosome string from the current generation of chromosome strings in the at least one further generation of chromosome strings.

In some optional embodiments, the method may comprise generating further generations of chromosome strings until at least one chromosome string comprising a suitable solution for signal strength attenuation characteristic values for the set of cells is found.

In some optional embodiments, a chromosome string comprising a suitable solution for signal strength attenuation characteristic values for the set of cells may be found when no chromosome string in a succeeding generation of chromosome strings comprises a higher fitness score than that chromosome string.

In some optional embodiments, the method may comprise deriving signal strength attenuation characteristic values comprising slope and intercept values.

In some optional embodiments, determining the set of cells for which signal strength attenuation characteristic values are to be derived may comprise:
- taking an initial cell ID referenced within cell measurement reports; and
- adding to the initial cell ID with further cell IDs referenced within the same measurement reports as the initial cell ID to form the set of cells for which signal strength attenuation characteristic values are to be derived.

In some optional embodiments, the method may further comprise storing the derived signal strength attenuation characteristic values within at least one data storage device.

According to a second aspect of the present invention, there is provided a method of generating a signal strength contour model for at least one cell within a wireless communication network. The method comprises deriving at least one signal strength attenuation characteristic value for the at least one cell within the wireless communication network in accordance with the first aspect of the present invention, and generating a signal strength contour model for the at least one cell based at least partly on the at least one derived signal strength attenuation characteristic value.

According to a third aspect of the present invention, there is provided a method of geolocating a wireless communication subscriber unit. The method comprises deriving signal strength attenuation characteristic values for cells within a wireless communication network in accordance with the first aspect of the present invention, receiving signal strength measurement information for a set of cells within the wireless communication network obtained by the wireless communication subscriber unit, determining a distance between the wireless communication subscriber unit and an antenna for each cell within the set of cells based at least partly on:
(i) the derived signal strength attenuation characteristic values for the set of cells; and
(ii) the received signal strength measurement information for the set of cells within the wireless communication network obtained by the wireless communication subscriber unit; and
determining a geolocation of the wireless communication subscriber unit based at least partly on the determined distance between the wireless communication subscriber unit and an antenna for each cell within the set of cells.

According to a fourth aspect of the present invention, there is provided a program as specified in claim 16. Such a program can be provided by itself or carried by a carrier medium. The carrier medium may be a recording or other storage medium. The transmission medium may be a signal. In some optional embodiments, there is provided a computer program product having executable program code stored therein for performing a method of deriving signal strength attenuation characteristic values for cells within a wireless communication network. The program code operable for determining a set of cells for which signal strength attenuation characteristic values are to be derived, and using a genetic algorithm to derive signal strength attenuation characteristic values for the set of cells based at least partly on signal strength information for signal strength measurements obtained by wireless communication subscriber units within the wireless communication network.

In some optional embodiments, the computer program product may comprise at least one of: a hard disk, a CD-ROM, an optical storage device, a magnetic storage device, a Read Only Memory (ROM), a Programmable Read Only Memory (PROM), an Erasable Programmable Read Only Memory (EPROM), an Electrically Erasable Programmable Read Only Memory (EEPROM), and a Flash memory.

According to a fifth aspect of the present invention, there is provided a geolocation system comprising at least one signal strength attenuation characteristic value derivation component arranged to determine a set of cells within a wireless communication network for which signal strength attenuation characteristic values are to be derived, and use a genetic algorithm to derive signal strength attenuation characteristic values for the set of cells based at least partly on signal strength information for signal strength measurements obtained by wireless communication subscriber units within the wireless communication network..

In some optional embodiments, the at least one signal strength attenuation characteristic value derivation component may be arranged to store the derived signal strength attenuation characteristic values within at least one data storage device.

### Brief Description of the Drawings

Embodiments of the invention will be described, by way of example only, with reference to the accompanying drawings, in which:
Figure 1 illustrates the decay of signal strength with increasing distance from a basestation site.
Figure 2 illustrates the intersection of signal strength contours for a plurality of cells within a wireless communication network.
Figure 3 illustrates a simplified flowchart of an example of a method of deriving signal strength attenuation characteristic values for cells within a wireless communication network.
Figure 4 illustrates an example of such a chromosome string.
Figure 5 illustrates a simplified flowchart of an example of a method for calculating a fitness score for a generation of chromosome strings.
Figure 6 illustrates an example of a grid of signature points.
Figure 7 illustrates a simplistic two dimensional visualisation of finding a closest matching signature point for a measurement report.
Figure 8 illustrates a simplified example of calculating a fitness score for a match between a selected measurement report and a closest matching signature point.
Figure 9 illustrates a simplified flowchart of an example of a method of generating a next generation of chromosome strings.
Figure 10 illustrates an example of selecting individuals for parent chromosome strings.
Figure 11 illustrates an example of performing crossover between two parent chromosome strings.
Figure 12 illustrates a simplified flowchart of an example of a method of geolocating a wireless communication subscriber unit.
Figure 13 illustrates a simplified block diagram of an example of a geolocation system.
Figure 14 illustrates a typical computing system that may be employed to implement data processing functionality in embodiments of the invention.

### Detailed Description of Embodiments of the Invention

Examples of the invention will be described in terms of a system and a method for deriving signal strength attenuation characteristic values for cells within a wireless communication network, such as a network implemented in accordance with the 3^{rd} Generation (3G) and/or 4^{th} Generation (4G) of wireless telephone standards and technology. Examples of such 3G and 4G standards and technology is the Universal Wireless Telecommunications System (UMTS™) and Long Term Evolution (LTE), developed by the 3^{rd} Generation Partnership Project (3GPP™) (www.3gpp.org).

In order to accurately model signal strength contours for cells within wireless communication networks, it is necessary to ascertain accurate attenuation characteristic values such as the slope of the signal attenuation with distance from the basestation sites for the cells, as well as the 'starting point' for the graph, known as the intercept point. Determining these slope and intercept attenuation characteristic values for base-stations within a network (and refining the values with time, as the network or environment evolves) allows accurate position estimates to be determined purely from received signal strength information (such as: Reference Signal Received Power (RSRP) and/or Received Signal Strength Indicator (RSSI) in LTE parlance) and a knowledge of the basestation's identity (and hence location).

In accordance with some examples of the present invention there is provided a method and apparatus therefor, the method comprising deriving signal strength attenuation characteristic values for cells within a wireless communication network. The method comprises determining a set of cells for which signal strength attenuation characteristic values are to be derived, generating a first generation of chromosome strings, each chromosome string comprising at least one signal strength attenuation characteristic value for each cell within the determined set of cells, calculating a fitness score for each chromosome string within the first generation of chromosome strings based at least partly on signal strength information for signal strength measurements obtained by wireless communication subscriber units within the wireless communication network, generating at least one further generation of chromosome strings, calculating a fitness score for each chromosome string within the at least one further generation of chromosome strings based at least partly on signal strength information for signal strength measurements obtained by wireless communication subscriber units within the wireless communication network, and deriving signal strength attenuation characteristic values for the set of cells based at least partly on the calculated fitness scores for the first and at least one further generation of chromosome strings.

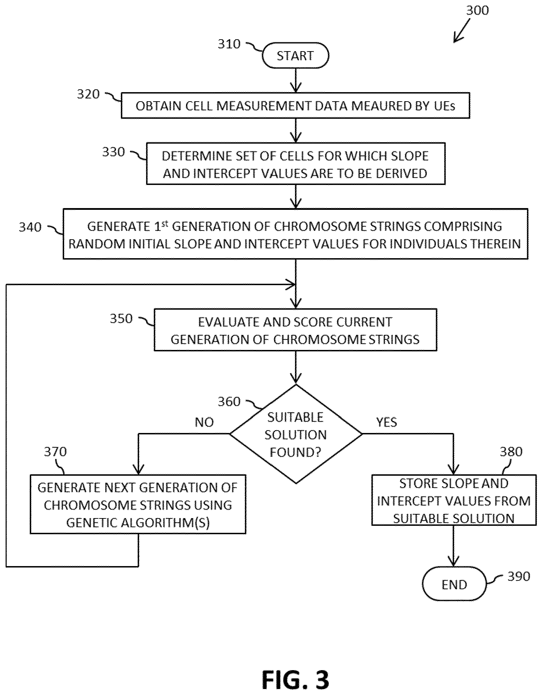

Referring first to Figure 3, there is illustrated a simplified flowchart 300 of an example of a method of deriving signal strength attenuation characteristic values for cells within a wireless communication network. The method starts at 310, and moves on to step 320 where cell measurement data measured by wireless communication units, or User Equipment (UEs) in 3G/4G parlance, is obtained. For example, such cell measurement data may comprise, or be obtained from, measurement report messages provided by UEs over a period of time, for example as part of a cell selection/reselection process or otherwise. Such cell measurement data comprises cell IDs (a cell ID comprising a unique identifier for a particular cell) for cells visible to the respective UEs along with measurement data for the strength of signals from the respective cells as measured by the respective UEs. Each such measurement report typically comprises signal strength data for cells measured by the respective UE at substantially the same time. As such, the signal strength measurement data provided within a measurement report will relate to substantially the same location for the UE (i.e. the location of the UE at the time the signal strength measurements were taken).

Having obtained the cell measurement data at step 320, the method of the illustrated example moves on to step 330, where a set of cells for which attenuation characteristic values (e.g. slope and intercept values in the illustrated example) are to be derived is determined. For example, such a set of cells may be determined by taking an initial cell ID referenced within the obtained cell measurement data. This initial cell ID may then be added to with further cell IDs that are also referenced within the same measurement report messages as the initial cell ID to form the set of cells for which attenuation characteristic values are to be derived. In this manner, all of the cell IDs within the set of cells are linked by at least one common cell ID with which they are referenced in a particular measurement report message.

In some examples of the present invention, given a set of measurement report messages for an entire wireless communication network (for example a whole day's worth of measurement report messages for the entire wireless communication network), all cell IDs referenced within the set of measurement report messages may be identified. A 'bucket' may then be created for each referenced cell ID, and each measurement report message referencing the respective cell ID can then be placed within the corresponding bucket. The measurement reports within a bucket may then be used to determine a set of cells for which signal strength attenuation characteristic values are to be derived, with the cell ID for which the bucket was initially created comprising the initial cell ID and further cell IDs within the set being extracted from the message report messages within the bucket.

Determining a set of cells in this manner enables the wireless communication network to be partitioned into manageable 'chunks' to reduce the number of cells (and thus the number of varying parameters) to a manageable amount from a processing perspective. Repeating the method of Figure 3 for different sets of cells enables the complete network to be covered over a number of iterations. It is contemplated that sets of, say, approximately 20 cells are created, although this is only an approximate target size and is for the most part dependent on the processing resource available etc.

Referring back to Figure 3, having determined the set of cells for which slope and intercept values are to be derived, the method moves on to step 340 where a first generation of 'chromosome' strings are generated, each chromosome string comprising the signal strength attenuation characteristic values (i.e. slope and intercept values in the illustrated example) for each cell within the determined set of cells.

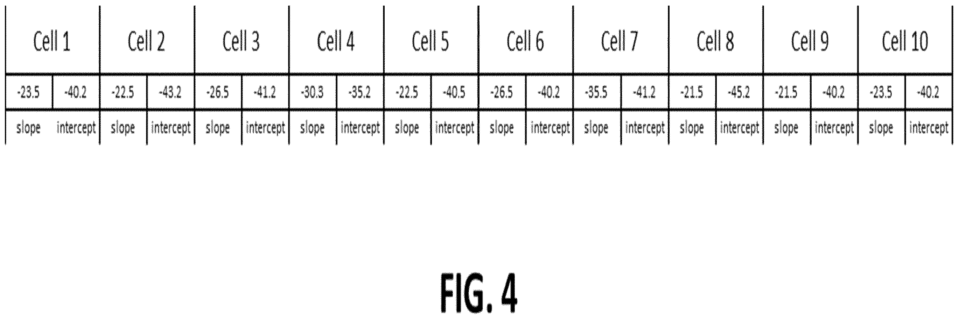

Figure 4 illustrates an example of such a chromosome string. As illustrated in Figure 4, each chromosome string is made up of 'candidate solutions' for the signal strength attenuation characteristic values (i.e. the slope and intercept values in the illustrated example) for the set of cells. Each candidate solution for the signal strength attenuation characteristic value(s) of a particular cell is referred to as an 'individual'. Each generation of chromosome strings may comprise, say, between 50 and 200 individual chromosome strings, each chromosome string comprising a different population of candidate solutions for the signal strength attenuation characteristic values. In the illustrated example of Figure 3, the individuals within the first generation of chromosome strings comprise random signal strength attenuation characteristic values.

Referring back to Figure 3, having generated the first generation of chromosome strings for the determined set of cells, the method moves on to 350 where the current (i.e. first in this instance) generation of chromosome strings are evaluated and given a fitness score. Such a fitness score for each chromosome string may be calculated based on signal strength information for signal strength measurements obtained by wireless communication subscriber units within the wireless communication network.

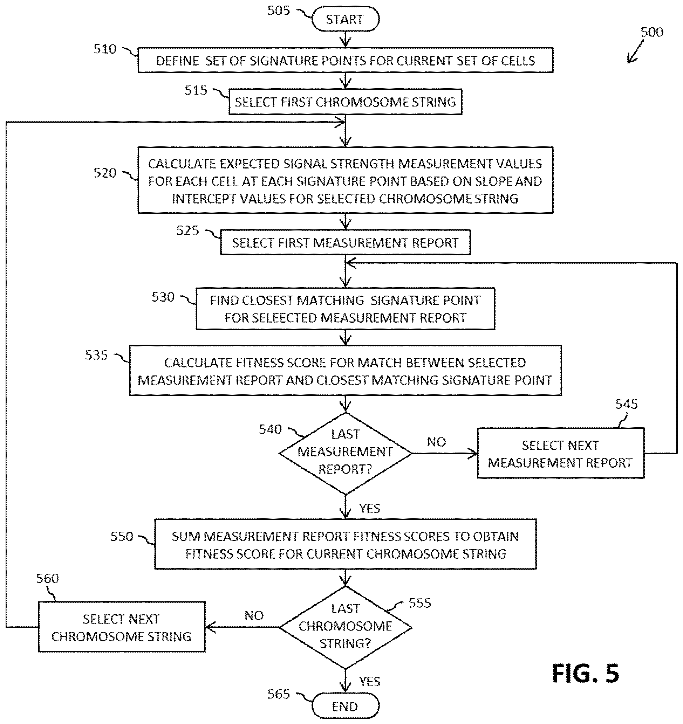

In some examples, calculating a fitness score for a chromosome string may comprise defining a plurality of signature points, each signature point representing a geographical location. Figure 5 illustrates a simplified flowchart 500 of an example of a method for calculating a fitness score for a generation of chromosome strings, such as may be implemented within step 350 of Figure 3. The method of Figure 5 starts at 505 and moves on to 510 where a set of signature points for the set of cells within the chromosome strings is defined, each signature point representing a geographical location.

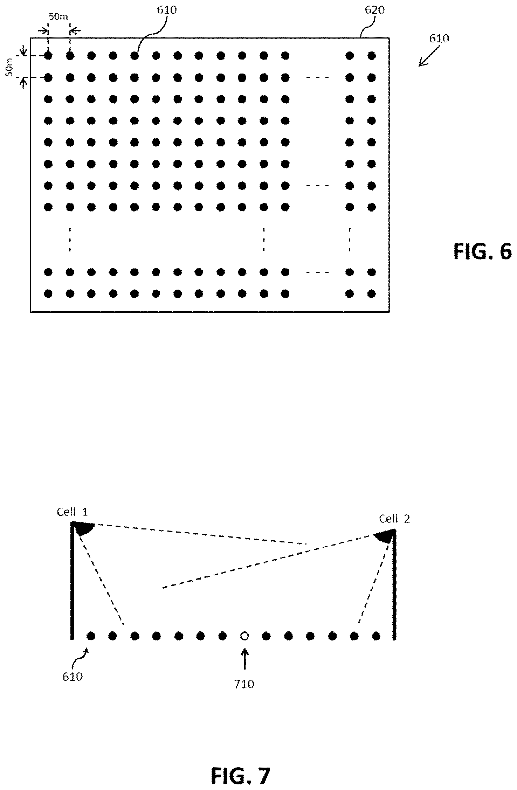

For example, and as illustrated in Figure 6, a grid 600 of signature points 610 may be defined. The grid 600 may be limited to being within the bounds 620 of the combined coverage areas for the set of cells to which the chromosome string relates. In the illustrated example, the signature points 610 are spaced 50 metres apart.

Referring back to Figure 5, having defined the set of signature points, the method moves on to step 515 where a first chromosome string from the generation of chromosome strings is selected. Next, at step 520, an expected signal strength for each cell within the set of cells is then calculated at each signature point based on the known locations of the respective basestations for the cells (e.g. as defined within network configuration data for the wireless communication network) and, in the illustrated example, the slope and intercept values for the respective cells as defined in that particular chromosome string.

Having calculated the expected signal strength value for each cell at each signature point, the method moves on to step 525 where, in the illustrated example, a first measurement report is selected from a set of measurement reports corresponding to the set of cells to which the chromosome string relates. For example, in the example where the set of cells is determined by way of creating a 'bucket' for a particular (initial) cell ID and each measurement report message referencing the respective cell ID is placed within the corresponding bucket, the set of measurement reports may comprise the measurement reports within the respective bucket.

Having selected the first measurement report, the method moves on to step 530 where a closest matching signature point is found for the selected measurement report. For example, Figure 7 illustrates a simplistic two dimensional visualisation of finding a closest matching signature point for a measurement report. In this illustrated example, the signal strength measurements within the selected measurement report are compared to the expected signal strength values at each signature point 610 (as calculated at step 520). The closest matching signature point, e.g. such as indicated at 710 in Figure 7, may be determined based on, say, the signature point for which the measurement report comprises the largest number of Cell IDs matching the ten nearest cells/basestations to the signature point, the closest match between measured and expected signal strength values, etc.

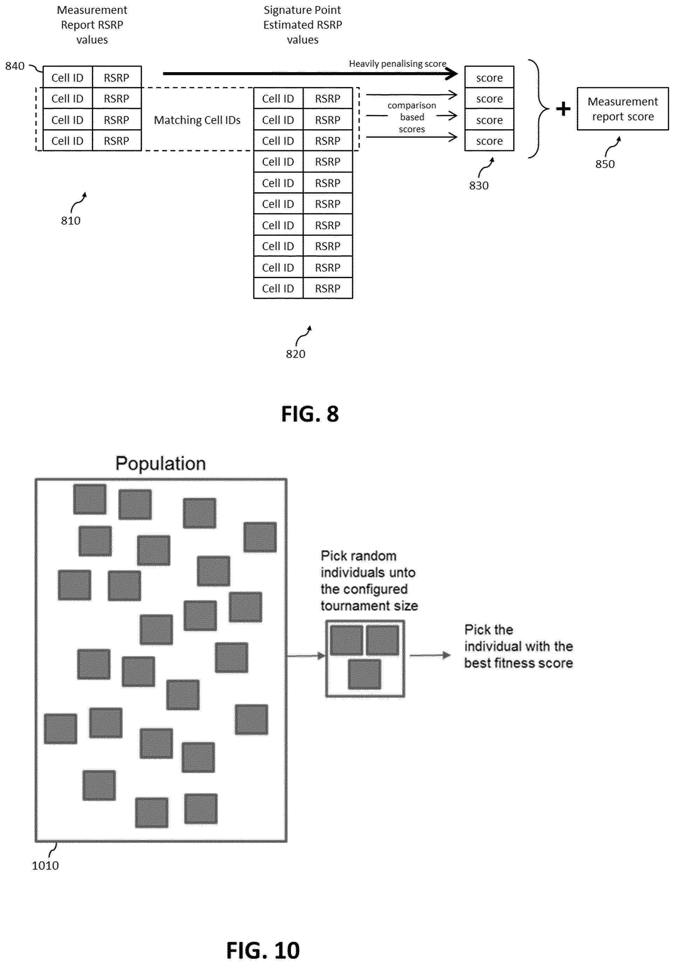

Referring back to Figure 5, having found the closest matching signature point for the selected measurement report, a fitness score is then calculated for the match between the selected measurement report and the closest matching signature point. For example, and as illustrated in Figure 8, the selected measurement report 810 comprises a signal strength value (e.g. a Reference Signal Received Power (RSRP) in LTE parlance) corresponding to each of one or more cell IDs, the signal strength value representing a measured signal strength for respective cells visible to the UE at the time. Similarly, the closest matching signature set 820 comprises an expected signal strength value corresponding to each of one or more cell IDs, as calculated at step 520 in Figure 5. In the example illustrated in Figure 8, a score 830 is determined for each signal strength measurement within the measurement report 810 based on a comparison with corresponding expected signal strength values of the signature point for the respective cell IDs. In some examples, the comparison may be limited to, for example, the ten cell IDs for the signature point comprising the highest expected signal strength values. In the illustrated example, where no expected signal strength value is available for comparison with a measured signal strength value in the selected measurement report, such as the signal strength measurement value indicated at 840 in Figure 8, the score for that measured signal strength value may be heavily penalised. The individual scores 830 for the measured signal strength values may then be added together to provide a fitness score 850 for the match between the selected measurement report and the closest matching signature point.

Referring back to Figure 5, having calculated the fitness score for the match between the selected measurement report and the closest matching signature point, the method moves on to step 540, where it is determined whether a fitness score has been calculated for each measurement report (in the set of measurement reports). If it is determined that a fitness score has not been calculated for each measurement report, the method moves on to step 545 where the next measurement report is selected, and the method loops back to step 530 so that a fitness score for that measurement report can be calculated. Conversely, if it is determined that a fitness score has been calculated for each measurement report, the method moves on to step 550 where in the illustrated example the individual measurement report scores are summed to obtain a fitness score for the chromosome string. The method then moves on to step 555, where it is determined whether a fitness score has been calculated for each chromosome string (in the current generation of chromosome strings). If it is determined that a fitness score has not been calculated for each chromosome string, the method moves on to step 560 where the next chromosome string is selected, and the method loops back to step 520. Conversely, if it is determined that a fitness score has been calculated for each chromosome string, the method ends at 565.

Referring back to Figure 3, having evaluated and scored the current (first) generation of chromosome strings, the method moves on to step 360 where it is determined whether a suitable solution has been found for the signal strength attenuation characteristic values (i.e. slope and intercept values in the illustrated example) for the set of cells. For example, it may be determined that a chromosome string comprising a suitable solution for signal strength attenuation characteristic values for the set of cells has been found when no chromosome string in a succeeding generation of chromosome strings comprises a higher fitness score than that chromosome string.

In this instance, since the current generation of chromosome strings comprises the first generation of chromosome strings, it may be assumed that a suitable solution has not been found in this instance. Accordingly, the method moves on to step 370 where a next generation of chromosome strings is generated.

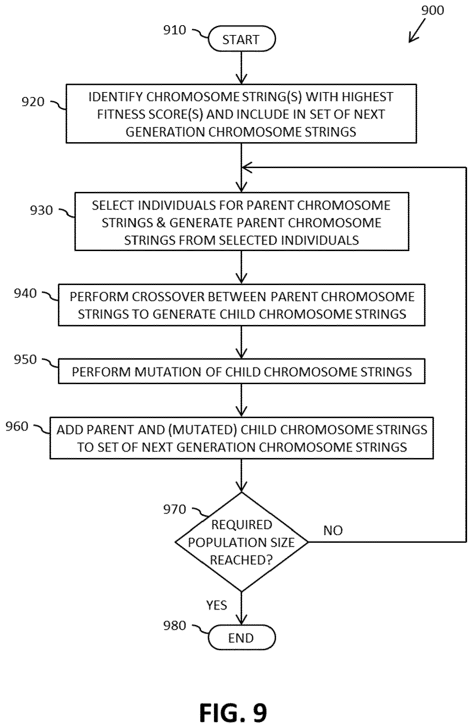

Figure 9 illustrates a simplified flowchart 900 of an example of a method of generating a next generation of chromosome strings. The method starts at 910, and moves on to step 920 where, in the illustrated example, chromosome strings from the most recent generation of chromosome strings comprising the highest fitness scores are identified and added to (i.e. to begin) a set of chromosome strings to comprise the next generation of chromosome strings. For example, the two highest scoring chromosome strings from the previous (i.e. most recent) generation of chromosome strings may be identified and added to the set of chromosome strings to comprise the next generation of chromosome strings. In this manner, the 'best' chromosome strings from the previous generation survive into the next generation. The method then moves on to step 930, where in the illustrated example individuals (i.e. candidate solutions for the signal strength attenuation characteristic values for the set of cells) are selected for parent chromosome, and such parent chromosome strings are generated from the selected individuals. For example, and as illustrated in Figure 10, a set of individuals may be randomly selected from a 'population' 1010 of individuals comprising the set of individuals corresponding to a particular cell from all chromosome strings within the previous (most recent) generation of chromosome strings. In this manner, a randomly selected set of individuals corresponding to a particular cell is obtained from the respective population of individuals for that cell. From this randomly selected set of individuals, the individual comprising the best fitness score (e.g. based on the fitness score for the chromosome string from which the individual has come) may then be selected as the individual for the respective cell within a parent chromosome string. This may be repeated until an individual has been selected for all cells within the parent chromosome string, and thus a parent chromosome string may be generated. This may be repeated to generate (at least) two parent chromosome strings.

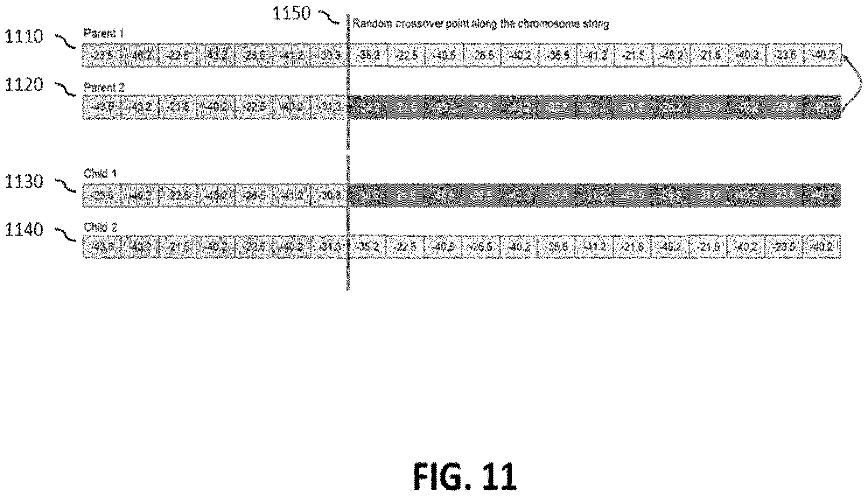

Referring back to Figure 9, having generated a pair of parent chromosome strings, one or more genetic algorithms may then be used to generate child chromosome strings from the parent chromosome strings. For example, and as illustrated in Figure 9, the method may comprise performing 'crossover' between the parent chromosome strings, at step 940. Figure 11 illustrates an example of performing crossover between two parent chromosome strings 1110, 1120 to generate two child chromosome strings 1130, 1140 therefrom. In the illustrated example, a random crossover point 1150 within the parent chromosome strings is determined. The individuals 'below' this crossover point 1150 within the parent chromosome strings are swapped such that the individuals below the crossover point 1150 within the first parent chromosome string 1110 become the individuals below the crossover point 1150 within the second 'child' chromosome string 1140, and the individuals below the crossover point 1150 within the second parent chromosome string 1120 become the individuals below the crossover point 1150 within the first 'child' chromosome string 1130.

Referring back to Figure 9, having performed the crossover to generate the child chromosome strings, mutation of the generated child chromosome strings is then performed in the illustrated example, at step 950. Mutation is a genetic operator used to maintain genetic diversity from one generation of a population of genetic algorithm chromosome strings to the next. It is analogous to biological mutation. Mutation alters one or more gene values (individuals) in a chromosome string from its initial state. Such, mutation occurs according to a chosen mutation probability, and any such chosen mutation probability may be used to provide a suitable genetic diversity between parent and child chromosome strings.

The parent and mutated chromosome strings are then added to the set of next generation chromosome strings, at step 960. The non-mutated child chromosome strings may also be added to the set of next generation of chromosome strings.

The method then moves on to step 970, where it is determined whether a required population size for the next generation of chromosome strings has been reached. Such a required population size may be in the range of, say, 50 to 100 chromosome strings. If it is determined that the required population size has not been reached, then the method loops back to step 930. Conversely, if it is determined that the required population size has been reached, the method ends at 980.

Referring back to Figure 3, having generated the next generation of chromosome strings, the method loops back to step 350 where the newly generated generation of chromosome strings are evaluated and given a fitness score. The method then moves on again to step 360 where it is determined whether a suitable solution has been found for the signal strength attenuation characteristic values for the set of cells in this next generation of chromosome strings. In this manner, the method comprises generating further generations of chromosome strings until at least one chromosome string comprising a suitable solution for signal strength attenuation characteristic values for the set of cells is found.

Once it is determined that a suitable solution for signal strength attenuation characteristic values for the set of cells is found, the method moves on to 380, where the signal strength attenuation values (i.e. slope and intercept values in the illustrated example) from the suitable solution are stored within one or more data storage devices, at step 380, and the method ends at 390.

Thus, an exemplary method of deriving signal strength attenuation characteristic information for cells within a wireless communication network has been described based on the use of a genetic algorithm. Advantageously, the use of genetic algorithms in this manner enables signal strength attenuation characteristic information to be derived on a per cell basis from signal strength measurement information provided by wireless communication units, and also to enable such information to be repeatedly derived using continuously received signal strength measurement data. As a result, the specific and ever changing environmental influences for individual cells can be taken into consideration to enable a more accurate modelling of signal strength contours for individual cells to be achieved. Furthermore, any changes over time to the signal strength attenuation characteristics for cells within the network can be identified and taken into consideration. For example, in more rural environments, changes in plant and tree foliage due to changes in season may be modelled. Furthermore, changes in urban/suburban environments due to new buildings etc. being constructed can also be adapted for.

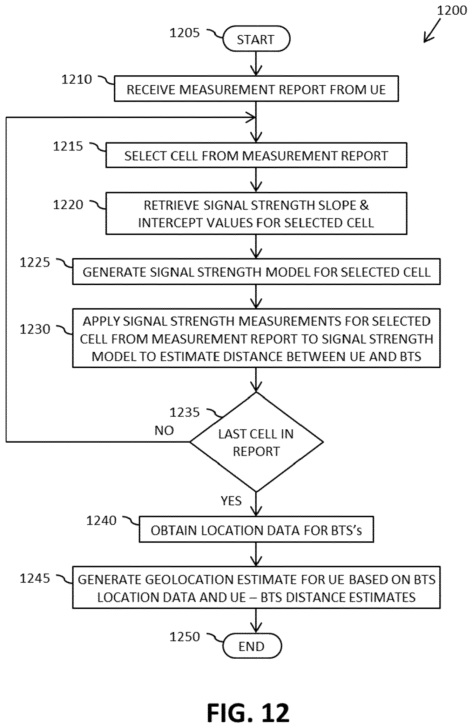

Figure 12 illustrates a simplified flowchart 1200 of an example of a method of geolocating a wireless communication subscriber unit. The method starts at 1205, and moves on to step 1210 where a measurement report from the wireless communication unit (UE) is received comprising signal strength measurement data for a set of cells. Next, at step 1215, a cell from the set of cells for which the measurement report comprises signal strength measurement data is selected. Signal strength attenuation characteristic information (which in the illustrated example comprises slope and intercept values) is then retrieved from a data storage device at step 1220. In particular, signal strength attenuation characteristic information derived by way of a genetic algorithm based on signal strength measurement information received from wireless communication units, such as the method of Figure. 3, is retrieved. A signal strength model is then generated for the selected cell based on the retrieved signal strength attenuation characteristic information at step 1225. For example, the slope and intercept values for the illustrated example may be used to derive radial distance values for signal strength contours relative to a basestation antenna of the selected cell. The signal strength measurement data within the receive measurement report for the selected cell is then applied to the generated signal strength model to estimate a distance between the wireless communication unit and the basestation/antenna for the selected cell, at step 1230. Having estimated the distance between the wireless communication unit and the selected cell basestation/antenna, the method moves on to step 1235 where it is determined whether the selected cell is the last cell in the measurement report. If it is determined that the selected cell is not the last cell in the measurement report, the method loops back to step 1215, where the next cell in the measurement report is selected. Conversely, if it is determined that the selected cell is the last cell in the measurement report, the method moves on to step 1240, where location data for the basestations/antennas of the set of cells is obtained, for example from a network configuration database or the like. A geolocation estimate for the wireless communication unit is then generated at step 1245 based on locations of the basestations/antennas of the set of cells and the estimated distances between the wireless communication unit and the basestations/antennas of the set of cells. The method then ends at 1250.

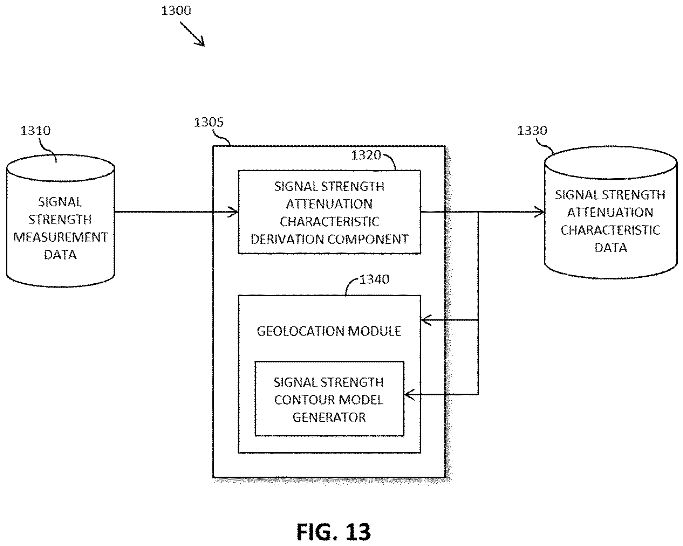

Referring now to Figure 13, there is illustrated a simplified block diagram of an example of a geolocation system 1300. The geolocation system 1300 may be implemented in any suitable manner. For example, and as illustrated in Figure 13, the geolocation system 1300 may be implemented at least in part by way of one or more processing modules 1305 arranged to execute computer program code. The computer program code may be stored within one or more (e.g. non-transitory) computer program products, for example such as one or more memory element(s). Such memory element(s) may comprise any form of computer-readable storage device, such as a hard disc, a CD-ROM, an optical storage device, a magnetic storage device, a Read Only Memory, ROM, a Programmable Read Only Memory, PROM, an Erasable Programmable Read Only Memory, EPROM, an Electrically Erasable Programmable Read Only Memory, EEPROM, and a Flash memory.

In particular, the geolocation system 1300 illustrated in Figure 13 comprises a signal strength attenuation characteristic derivation component 1320 (in the form of computer program code executing on the processing module(s) 1305), the signal strength attenuation characteristic derivation component 1320 being arranged to implement a method of deriving signal strength attenuation characteristic values for cells within a wireless communication network, such as the method hereinbefore described with reference to Figures 3 to 11. In the illustrated example, the geolocation system 1300 is operably coupled to a data storage device 1310 in which cell measurement data received from wireless communication units is stored, and is arranged to receive cell measurement data from the data storage device 1310. The geolocation system 1300 is further operably coupled to a data storage device 1330 within which the signal strength attenuation characteristic derivation component 1320 is arranged to store signal strength attenuation characteristic values. In some examples, the data storage device 1320 and the data storage device 1330 may be realised by way of a single data storage device.

In the illustrated example, the geolocation system 1300 further comprises a geolocation module 1340 (in the form of computer program code executing on the processing module(s) 1305), arranged to perform geolocation of wireless communication units, such as the method hereinbefore described with reference to Figure 12. In the illustrated example, the geolocation module 1340 comprises a signal strength contour model generator component 1345 arranged to generate signal strength contours for cells within a wireless communication network based on signal strength attenuation characteristic data derived by the signal strength attenuation characteristic derivation component 1320, and stored within the data storage device 1330.

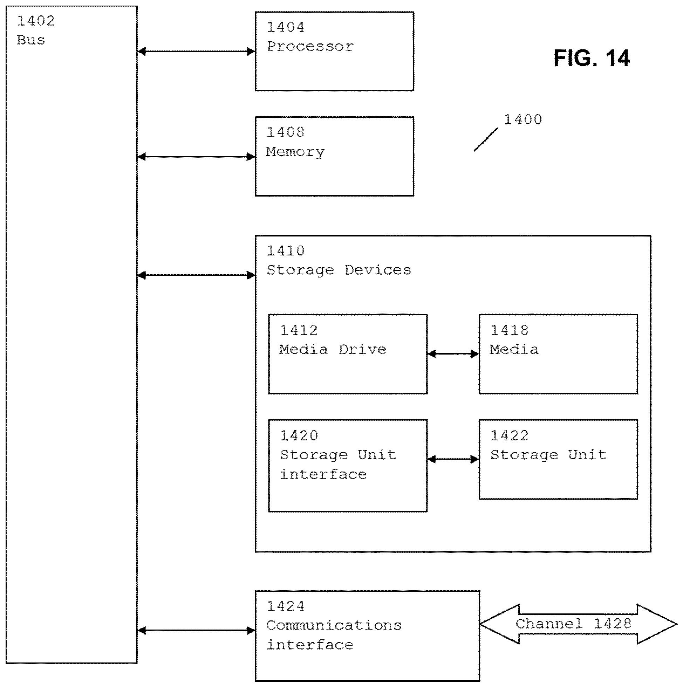

Referring now to Figure 14, there is illustrated a typical computing system 1400 that may be employed to implement signal processing functionality in embodiments of the invention. For example, a computing system of this type may be used within the geolocation system 1300 of Figure 13. Those skilled in the relevant art will also recognize how to implement the invention using other computer systems or architectures. Computing system 1400 may represent, for example, a desktop, laptop or notebook computer, hand-held computing device (PDA, cell phone, palmtop, etc.), mainframe, server, client, or any other type of special or general purpose computing device as may be desirable or appropriate for a given application or environment. Computing system 1400 can include one or more processors, such as a processor 1404. Processor 1404 can be implemented using a general or special-purpose processing engine such as, for example, a microprocessor, microcontroller or other control module. In this example, processor 1404 is connected to a bus 1402 or other communications medium.

Computing system 1400 can also include a main memory 1408, such as random access memory (RAM) or other dynamic memory, for storing information and instructions to be executed by processor 1404. Main memory 1408 also may be used for storing temporary variables or other intermediate information during execution of instructions to be executed by processor 1404. Computing system 1400 may likewise include a read only memory (ROM) or other static storage device coupled to bus 1402 for storing static information and instructions for processor 1404.

The computing system 1400 may also include information storage system 1410, which may include, for example, a media drive 1412 and a removable storage interface 1420. The media drive 1412 may include a drive or other mechanism to support fixed or removable storage media, such as a hard disk drive, a floppy disk drive, a magnetic tape drive, an optical disk drive, a compact disc (CD) or digital video drive (DVD) read or write drive (R or RW), or other removable or fixed media drive. Storage media 1418 may include, for example, a hard disk, floppy disk, magnetic tape, optical disk, CD or DVD, or other fixed or removable medium that is read by and written to by media drive 1412. As these examples illustrate, the storage media 1418 may include a computer-readable storage medium having particular computer software or data stored therein.

In alternative embodiments, information storage system 1410 may include other similar components for allowing computer programs or other instructions or data to be loaded into computing system 1400. Such components may include, for example, a removable storage unit 1422 and an interface 1420, such as a program cartridge and cartridge interface, a removable memory (for example, a flash memory or other removable memory module) and memory slot, and other removable storage units 1422 and interfaces 1420 that allow software and data to be transferred from the removable storage unit 1418 to computing system 1400.

Computing system 1400 can also include a communications interface 1424. Communications interface 1424 can be used to allow software and data to be transferred between computing system 1400 and external devices. Examples of communications interface 1424 can include a modem, a network interface (such as an Ethernet or other NIC card), a communications port (such as for example, a universal serial bus (USB) port), a PCMCIA slot and card, etc. Software and data transferred via communications interface 1424 are in the form of signals which can be electronic, electromagnetic, and optical or other signals capable of being received by communications interface 1424. These signals are provided to communications interface 1424 via a channel 1428. This channel 1428 may carry signals and may be implemented using a wireless medium, wire or cable, fiber optics, or other communications medium. Some examples of a channel include a phone line, a cellular phone link, an RF link, a network interface, a local or wide area network, and other communications channels.

In this document, the terms 'computer program product' 'computer-readable medium' and the like may be used generally to refer to media such as, for example, memory 1408, storage device 1418, or storage unit 1422. These and other forms of computer-readable media may store one or more instructions for use by processor 1404, to cause the processor to perform specified operations. Such instructions, generally referred to as 'computer program code' (which may be grouped in the form of computer programs or other groupings), when executed, enable the computing system 1400 to perform functions of embodiments of the present invention. Note that the code may directly cause the processor to perform specified operations, be compiled to do so, and/or be combined with other software, hardware, and/or firmware elements (e.g. libraries for performing standard functions) to do so.

As used herein, the expression non-transitory will be understood to refer to the non-ephemeral nature of the storage medium itself rather than to a notion of how long the stored information itself may persist in a stored state. Accordingly, memories that might otherwise be viewed, for example, as being volatile (such as many electronically-erasable programmable read-only memories (EPROM's) or random-access memories (RAM's)) are nevertheless to be viewed here as being "non-transitory" whereas a signal carrier in transit is to be considered "transitory" notwithstanding that the signal may remain in transit for a lengthy period of time.

In an embodiment where the elements are implemented using software, the software may be stored in a computer-readable medium and loaded into computing system 1400 using, for example, removable storage drive 1422, drive 1412 or communications interface 1424. The control module (in this example, software instructions or computer program code), when executed by the processor 1404, causes the processor 1404 to perform the functions of the invention as described herein.

Furthermore, the inventive concept can be applied to any signal processing circuit. It is further envisaged that, for example, a semiconductor manufacturer may employ the inventive concept in a design of a stand-alone device, such as a microcontroller, digital signal processor, or application-specific integrated circuit (ASIC) and/or any other sub-system element.

It will be appreciated that, for clarity purposes, the above description has described embodiments of the invention with reference to different functional units and processors. However, it will be apparent that any suitable distribution of functionality between different functional units or processors may be used without detracting from the invention. For example, functionality illustrated to be performed by the same processor or controller may be performed by separate processors or controllers. Hence, references to specific functional units are only to be seen as references to suitable means for providing the described functionality, rather than indicative of a strict logical or physical structure or organization.

Because the illustrated embodiments of the present invention may for the most part, be implemented using electronic components and circuits known to those skilled in the art, details will not be explained in any greater extent than that considered necessary as illustrated above, for the understanding and appreciation of the underlying concepts of the present invention and in order not to obfuscate or distract from the teachings of the present invention.

In the foregoing specification, the invention has been described with reference to specific examples of embodiments of the invention. It will, however, be evident that various modifications and changes may be made therein without departing from the broader scope of the invention as set forth in the appended claims. Other modifications, variations and alternatives are also possible. The specifications and drawings are, accordingly, to be regarded in an illustrative rather than in a restrictive sense.

In the claims, any reference signs placed between parentheses shall not be construed as limiting the claim. The word 'comprising' does not exclude the presence of other elements or steps then those listed in a claim. Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles. Unless stated otherwise, terms such as "first" and "second" are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage.

## Claims

1. A method of determining a geolocation of a wireless communication subscriber unit within a wireless communication network; the method comprising:
receiving measurement information comprising cell measurement reports, from wireless communication subscriber units within a wireless communication network;
determining a set of cells for which signal strength attenuation characteristic values are to be derived,
wherein determining the set of cells for which the signal strength attenuation characteristic values are to be derived comprises:
taking an initial cell ID referenced within cell measurement reports; and
adding to the initial cell ID with further cell IDs referenced within the same measurement reports as the initial cell ID to form the set of cells for which signal strength attenuation characteristic values are to be derived,
wherein the cell IDs within the set of cells are linked by at least one common cell ID with which the cell IDs are referenced in a particular measurement report message;
generating a first generation of chromosome strings, each chromosome string comprising at least one signal strength attenuation characteristic value for each cell within the determined set of cells;
calculating a fitness score for each chromosome string within the first generation of chromosome strings based at least partly on signal strength information for signal strength measurements obtained by the wireless communication subscriber units within the wireless communication network;
generating at least one further generation of chromosome strings;
calculating a fitness score for each chromosome string within the at least one further generation of chromosome strings based at least partly on the signal strength information for the signal strength measurements obtained by the wireless communication subscriber units within the wireless communication network;
deriving the signal strength attenuation characteristic values for the set of cells based at least partly on the calculated fitness scores for the first and at least one further generation of chromosome strings;
receiving signal strength measurement information for the set of cells,
the signal strength measurement information being obtained by the wireless communication subscriber unit;
retrieving the signal strength attenuation characteristic values for the set of cells that were derived by way of the genetic algorithm based on measurement information received from wireless communication subscriber units of the wireless communication network,
the signal strength attenuation characteristic values including slope and intercept values;
determining a distance between the wireless communication subscriber unit and an antenna for each cell within the set of cells based on:
the signal strength attenuation characteristic values for the set of cells, and
the received signal strength measurement information for the set of cells within the wireless communication network obtained by the wireless communication subscriber unit,
the distance being determined using a signal strength model generated based on radial distance values for signal strength contours relative to the antenna,
the radial distance values being derived based on the slope and intercept values;
obtaining location data for the antenna for each cell within the set of cells; and
determining a geolocation of the wireless communication subscriber unit based on:
the determined distance between the wireless communication subscriber unit and the antenna for each cell within the set of cells, and
the location data for the antenna for each cell within the set of cells.

2. The method of claim 1, wherein the first generation of chromosome strings comprises random signal strength attenuation characteristic values.

3. The method of claim 1 or claim 2, wherein calculating the fitness score for a chromosome string comprises:
defining a plurality of signature points, each signature point representing a geographical location;
calculating an expected signal strength measurement value for at least one cell at each signature point;
matching each of a plurality of signal strength measurement reports received from wireless communication subscriber units to one of the signature points based at least partly on the expected signal strength measurement values for the signature points;
calculating a fitness score for each signal strength measurement report based at least partly on each expected signal strength measurement value for the respective signature point and corresponding signal strength information from the signal strength measurement report; and
calculating the fitness score for the chromosome string based at least partly on the calculated fitness scores for the plurality of signal strength measurement reports.

4. The method of claim 3, wherein the method further comprises:
calculating the fitness scores for the chromosome string by summing the fitness scores for the signal strength measurement reports.

5. The method of any of claims 1 to 4, wherein generating the at least one further generation of chromosome strings comprises:
deriving parent chromosome strings to form part of the at least one further generation of chromosome strings; and
performing a crossover between parent chromosome strings to generate child chromosome strings to form part of the at least one further generation of chromosome strings.

6. The method of claim 5, wherein generating the at least one further generation of chromosome strings further comprises:
performing mutation of the child chromosome strings.

7. The method of claim 5, wherein generating the at least one further generation of chromosome strings comprises:
identifying at least one chromosome string from a current generation of chromosome strings comprising a highest fitness score and including the identified at least one chromosome string from the current generation of chromosome strings in the at least one further generation of chromosome strings.

8. The method of any of claims 1 to 7, wherein the method further comprises:
generating further generations of chromosome strings until at least one chromosome string comprising a suitable solution for signal strength attenuation characteristic values for the set of cells is found.

9. The method of claim 8, wherein a chromosome string comprising the suitable solution for the signal strength attenuation characteristic values for the set of cells is found when no chromosome string in a succeeding generation of chromosome strings comprises a higher fitness score than that chromosome string.

10. The method of any of claims 1 to 9, wherein the method further comprises:
storing the derived signal strength attenuation characteristic values within at least one data storage device.

11. A program which, when executed by a computer, causes the computer to carry out the method of any of claims 1 to 10.

12. A geolocation system comprising a geolocation component arranged to:
receive measurement information comprising cell measurement reports, from wireless communication subscriber units within a wireless communication network;
determine a set of cells for which signal strength attenuation characteristic values are to be derived,
wherein the geolocation component, when determining the set of cells for which the signal strength attenuation characteristic values are to be derived, is to:
take an initial cell ID referenced within cell measurement reports; and
add to the initial cell ID with further cell IDs referenced within the same measurement reports as the initial cell ID to form the set of cells for which signal strength attenuation characteristic values are to be derived,
wherein the cell IDs within the set of cells are linked by at least one common cell ID with which the cell IDs are referenced in a particular measurement report message;
generate a first generation of chromosome strings, each chromosome string comprising at least one signal strength attenuation characteristic value for each cell within the determined set of cells;
calculate a fitness score for each chromosome string within the first generation of chromosome strings based at least partly on signal strength information for signal strength measurements obtained by the wireless communication subscriber units within the wireless communication network;
generate at least one further generation of chromosome strings;
calculate a fitness score for each chromosome string within the at least one further generation of chromosome strings based at least partly on the signal strength information for the signal strength measurements obtained by the wireless communication subscriber units within the wireless communication network;
derive the signal strength attenuation characteristic values for the set of cells based at least partly on the calculated fitness scores for the first and at least one further generation of chromosome strings;
receive signal strength measurement information for the set of cells within the wireless communication network,
the signal strength measurement information being obtained by a wireless communication subscriber unit;
retrieve the signal strength attenuation characteristic values for the set of cells that were derived by way of the genetic algorithm based on measurement information received from wireless communication subscriber units of the wireless communication network,
the signal strength attenuation characteristic values including slope and intercept values;
determine a distance between the wireless communication subscriber unit and an antenna for each cell within the set of cells based on:
the signal strength attenuation characteristic values for the set of cells, and
the received signal strength measurement information for the set of cells within the wireless communication network obtained by the wireless communication subscriber unit,
the distance being determined using a signal strength model generated based on radial distance values for signal strength contours relative to the antenna, the radial distance values being derived based on the slope and intercept values; and
obtain location data for the antenna for each cell within the set of cells; and
determine a geolocation of the wireless communication subscriber unit based on:
the determined distance between the wireless communication subscriber unit and the antenna for each cell within the set of cells, and
the location data for the antenna for each cell within the set of cells.

13. The geolocation system of claim 12, wherein the at least one signal strength attenuation characteristic value derivation component is arranged to store the derived signal strength attenuation characteristic values within at least one data storage device.

14. The geolocation system of claim 12, wherein the first generation of chromosome strings comprises random signal strength attenuation characteristic values.

15. The geolocation system of claim 12, wherein the at least one signal strength attenuation characteristic value derivation component is arranged to:
generate further generations of chromosome strings until at least one chromosome string comprising a suitable solution for signal strength attenuation characteristic values for the set of cells is found.

16. The geolocation system of claim 12, wherein the at least one signal strength attenuation characteristic value derivation component is arranged to:
store the derived signal strength attenuation characteristic values within at least one data storage device.

## Patentansprüche

1. Ein Verfahren zum Bestimmen einer Geostandort einer drahtlosen Kommunikationsteilnehmereinheit innerhalb eines drahtlosen Kommunikationsnetzes, wobei das Verfahren Folgendes beinhaltet:
Empfangen von Messinformationen, die Zellmessberichte beinhalten, von drahtlosen Kommunikationsteilnehmereinheiten innerhalb eines drahtlosen Kommunikationsnetzes;
Bestimmen eines Satzes Zellen, für die Signalstärkedämpfungskennwerte abgeleitet werden sollen,
wobei das Bestimmen des Satzes Zellen, für die Signalstärkedämpfungskennwerte abgeleitet werden sollen, Folgendes beinhaltet:
Nehmen einer anfänglichen Zell-ID, auf die innerhalb von Zellmessberichten Bezug genommen wird; und
Ergänzen der anfänglichen Zell-ID mit weiteren Zell-IDs, auf die innerhalb der gleichen Messberichte wie bei der anfänglichen Zell-ID Bezug genommen wird, um den Satz Zellen zu bilden, für die Signalstärkedämpfungskennwerte abgeleitet werden sollen,
wobei die Zell-IDs innerhalb des Satzes Zellen durch mindestens eine gemeinsame Zell-ID verknüpft sind, mit der auf die Zell-IDs in einer bestimmten Messberichtnachricht Bezug genommen wird;
Erzeugen einer ersten Generation von Chromosomensträngen, wobei jeder Chromosomenstrang mindestens einen Signalstärkedämpfungskennwert für jede Zelle innerhalb des bestimmten Satzes Zellen beinhaltet;
Berechnen einer Fitnessbewertung für jeden Chromosomenstrang innerhalb der ersten Generation von Chromosomensträngen mindestens teilweise auf der Basis von von den drahtlosen Kommunikationsteilnehmereinheiten innerhalb des drahtlosen Kommunikationsnetzes erhaltenen Signalstärkeinformationen für Signalstärkemessungen;
Erzeugen mindestens einer weiteren Generation von Chromosomensträngen;
Berechnen einer Fitnessbewertung für jeden Chromosomenstrang innerhalb der mindestens einen weiteren Generation von Chromosomensträngen mindestens teilweise auf der Basis der von den drahtlosen Kommunikationsteilnehmereinheiten innerhalb des drahtlosen Kommunikationsnetzes erhaltenen Signalstärkeinformationen für Signalstärkemessungen;
Ableiten der Signalstärkedämpfungskennwerte für den Satz Zellen mindestens teilweise auf der Basis der berechneten Fitnessbewertungen für die erste und mindestens eine weitere Generation von Chromosomensträngen;
Empfangen von Signalstärkemessinformationen für den Satz Zellen;
wobei die Signalstärkemessinformationen durch die drahtlose Kommunikationsteilnehmereinheit erhalten werden;
Abrufen der Signalstärkedämpfungskennwerte für den Satz Zellen, die durch den genetischen Algorithmus auf der Basis von Messinformationen, die von drahtlosen Kommunikationsteilnehmereinheiten des drahtlosen Kommunikationsnetzes empfangen wurden, abgeleitet wurden,
wobei die Signalstärkedämpfungskennwerte Neigungs- und Abfangwerte umfassen;
Bestimmen einer Distanz zwischen der drahtlosen Kommunikationsteilnehmereinheit und einer Antenne für jede Zelle innerhalb des Satzes Zellen auf der Basis von Folgendem:
den Signalstärkedämpfungskennwerten für den Satz Zellen, und
den empfangenen Signalstärkemessinformationen für den Satz Zellen innerhalb des drahtlosen Kommunikationsnetzes, erhalten von der drahtlosen Kommunikationsteilnehmereinheit,
wobei die Distanz unter Verwendung eines Signalstärkemodells bestimmt wird,
das auf der Basis von radialen Distanzwerten für Signalstärkekonturen relativ zu der Antenne erzeugt wird,
wobei die radialen Distanzwerte auf der Basis der Neigungs- und Abfangwerte abgeleitet werden;
Erhalten von Standortdaten für die Antenne für jede Zelle innerhalb des Satzes Zellen; und
Bestimmen einer Geostandort der drahtlosen Kommunikationsteilnehmereinheit auf der Basis von Folgendem:
der bestimmten Distanz zwischen der drahtlosen Kommunikationsteilnehmereinheit und der Antenne für jede Zelle innerhalb des Satzes Zellen, und
den Standortdaten für die Antenne für jede Zelle innerhalb des Satzes Zellen.

2. Verfahren gemäß Anspruch 1, wobei die erste Generation von Chromosomensträngen wahllose Signalstärkedämpfungskennwerte beinhaltet.

3. Verfahren gemäß Anspruch 1 oder Anspruch 2, wobei das Berechnen der Fitnessbewertung für einen Chromosomenstrang Folgendes beinhaltet:
Definieren einer Vielzahl von Erkennungspunkten, wobei jeder Erkennungspunkt einen geographischen Standort darstellt;
Berechnen eines erwarteten Signalstärkemesswerts für mindestens eine Zelle an jedem Erkennungspunkt;
Abgleichen jedes von einer Vielzahl von von den drahtlosen Kommunikationsteilnehmereinheiten empfangenen Signalstärkemessberichten mit einem der Erkennungspunkte mindestens teilweise auf der Basis der erwarteten Signalstärkemesswerte für die Erkennungspunkte;
Berechnen einer Fitnessbewertung für jeden Signalstärkemessbericht mindestens teilweise auf der Basis jedes erwarteten Signalstärkemesswerts für den entsprechenden Erkennungspunkt und entsprechender Signalstärkeinformationen aus dem Signalstärkemessbericht; und
Berechnen der Fitnessbewertung für den Chromosomenstrang mindestens teilweise auf der Basis der berechneten Fitnessbewertungen für die Vielzahl von Signalstärkemessberichten.

4. Verfahren gemäß Anspruch 3, wobei das Verfahren ferner Folgendes beinhaltet: Berechnen der Fitnessbewertungen für den Chromosomenstrang durch das Summieren der Fitnessbewertungen für die Signalstärkemessberichte.

5. Verfahren gemäß einem der Ansprüche 1 bis 4, wobei das Erzeugen der mindestens einen weiteren Generation von Chromosomensträngen Folgendes beinhaltet:
Ableiten von Elternchromosomensträngen, damit diese einen Teil der mindestens einen weiteren Generation von Chromosomensträngen bilden; und
Durchführen einer Kreuzung zwischen Elternchromosomensträngen, um Kinderchromosomenstränge zu erzeugen, damit diese einen Teil der mindestens einen weiteren Generation von Chromosomensträngen bilden.

6. Verfahren gemäß Anspruch 5, wobei das Erzeugen der mindestens einen weiteren Generation von Chromosomensträngen ferner Folgendes beinhaltet:
Durchführen einer Mutation der Kinderchromosomenstränge.

7. Verfahren gemäß Anspruch 5, wobei das Erzeugen der mindestens einen weiteren Generation von Chromosomensträngen Folgendes beinhaltet:
Identifizieren mindestens eines Chromosomenstrangs aus einer gegenwärtigen Generation von Chromosomensträngen, der eine höchste Fitnessbewertung beinhaltet, und Einschließen des identifizierten mindestens einen Chromosomenstrangs aus der gegenwärtigen Generation von Chromosomensträngen in der mindestens einen weiteren Generation von Chromosomensträngen.

8. Verfahren gemäß einem der Ansprüche 1 bis 7, wobei das Verfahren ferner Folgendes beinhaltet:
Erzeugen weiterer Generationen von Chromosomensträngen, bis mindestens ein Chromosomenstrang, der eine geeignete Lösung für Signalstärkedämpfungskennwerte für den Satz Zellen beinhaltet, gefunden ist.

9. Verfahren gemäß Anspruch 8, wobei ein Chromosomenstrang, der die geeignete Lösung für die Signalstärkedämpfungskennwerte für den Satz Zellen beinhaltet, gefunden ist, wenn kein Chromosomenstrang in einer folgenden Generation von Chromosomensträngen eine höhere Fitnessbewertung als dieser Chromosomenstrang beinhaltet.

10. Verfahren gemäß einem der Ansprüche 1 bis 9, wobei das Verfahren ferner Folgendes beinhaltet:
Speichern der abgeleiteten Signalstärkedämpfungskennwerte innerhalb mindestens einer Datenspeichervorrichtung.

11. Ein Programm, das, wenn durch einen Computer ausgeführt, bewirkt, dass der Computer das Verfahren gemäß einem der Ansprüche 1 bis 10 ausführt.

12. Ein Geostandortssystem, beinhaltend eine Geostandortskomponente, die für Folgendes eingerichtet ist:
Empfangen von Messinformationen, die Zellmessberichte beinhalten, von drahtlosen Kommunikationsteilnehmereinheiten innerhalb eines drahtlosen Kommunikationsnetzes;
Bestimmen eines Satzes Zellen, für die Signalstärkedämpfungskennwerte abgeleitet werden sollen,
wobei die Geostandortskomponente, wenn der Satz Zellen bestimmt wird, für die Signalstärkedämpfungskennwerte abgeleitet werden sollen, für Folgendes ist:
Nehmen einer anfänglichen Zell-ID, auf die innerhalb von Zellmessberichten Bezug genommen wirdI; und
Ergänzen zu der anfänglichen Zell-ID mit weiteren Zell-IDs, auf die innerhalb der gleichen Messberichte wie bei der anfänglichen Zell-ID Bezug genommen wird, um den Satz Zellen zu bilden, für die Signalstärkedämpfungskennwerte abgeleitet werden sollen,
wobei die Zell-IDs innerhalb des Satzes Zellen durch mindestens eine gemeinsame Zell-ID verknüpft sind, mit der auf die Zell-IDs in einer bestimmten Messberichtnachricht Bezug genommen wird;
Erzeugen einer ersten Generation von Chromosomensträngen, wobei jeder Chromosomenstrang mindestens einen Signalstärkedämpfungskennwert für jede Zelle innerhalb des bestimmten Satzes Zellen beinhaltet;
Berechnen einer Fitnessbewertung für jeden Chromosomenstrang innerhalb der ersten Generation von Chromosomensträngen mindestens teilweise auf der Basis von von den drahtlosen Kommunikationsteilnehmereinheiten innerhalb des drahtlosen Kommunikationsnetzes erhaltenen Signalstärkeinformationen für Signalstärkemessungen;
Erzeugen mindestens einer weiteren Generation von Chromosomensträngen;
Berechnen einer Fitnessbewertung für jeden Chromosomenstrang innerhalb der mindestens einen weiteren Generation von Chromosomensträngen mindestens teilweise auf der Basis der von den drahtlosen Kommunikationsteilnehmereinheiten innerhalb des drahtlosen Kommunikationsnetzes erhaltenen Signalstärkeinformationen für Signalstärkemessungen;
Ableiten der Signalstärkedämpfungskennwerte für den Satz Zellen mindestens teilweise auf der Basis der berechneten Fitnessbewertungen für die erste und mindestens eine weitere Generation von Chromosomensträngen;
Empfangen der Signalstärkemessinformationen für den Satz Zellen innerhalb des drahtlosen Kommunikationsnetzes,
wobei die Signalstärkemessinformationen durch eine drahtlose Kommunikationsteilnehmereinheit erhalten werden;
Abrufen der Signalstärkedämpfungskennwerte für den Satz Zellen, die durch den genetischen Algorithmus auf der Basis von Messinformationen, die von drahtlosen Kommunikationsteilnehmereinheiten des drahtlosen Kommunikationsnetzes empfangen wurden, abgeleitet wurden,
wobei die Signalstärkedämpfungskennwerte Neigungs- und Abfangwerte umfassen;
Bestimmen einer Distanz zwischen der drahtlosen Kommunikationsteilnehmereinheit und einer Antenne für jede Zelle innerhalb des Satzes Zellen auf der Basis von Folgendem:
den Signalstärkedämpfungskennwerten für den Satz Zellen, und
den empfangenen Signalstärkemessinformationen für den Satz Zellen innerhalb des drahtlosen Kommunikationsnetzes, erhalten von der drahtlosen Kommunikationsteilnehmereinheit,
wobei die Distanz unter Verwendung eines Signalstärkemodells bestimmt wird,
das auf der Basis von radialen Distanzwerten für Signalstärkekonturen relativ zu der Antenne erzeugt wird, wobei die radialen Distanzwerte auf der Basis der Neigungs- und Abfangwerte abgeleitet werden; und
Erhalten von Standortdaten für die Antenne für jede Zelle innerhalb des Satzes Zellen; und
Bestimmen einer Geostandort der drahtlosen Kommunikationsteilnehmereinheit auf der Basis von Folgendem:
der bestimmten Distanz zwischen der drahtlosen Kommunikationsteilnehmereinheit und der Antenne für jede Zelle innerhalb des Satzes Zellen, und
den Standortdaten für die Antenne für jede Zelle innerhalb des Satzes Zellen.

13. Geostandortssystem gemäß Anspruch 12, wobei die mindestens eine Signalstärkedämpfungskennwertableitungskomponente eingerichtet ist, um die abgeleiteten Signalstärkedämpfungskennwerte innerhalb mindestens einer Datenspeichervorrichtung zu speichern.

14. Geostandortssystem gemäß Anspruch 12, wobei die erste Generation von Chromosomensträngen wahllose Signalstärkedämpfungskennwerte beinhaltet.

15. Geostandortssystem gemäß Anspruch 12, wobei die mindestens eine Signalstärkedämpfungskennwertableitungskomponente für Folgendes eingerichtet ist: Erzeugen weiterer Generationen von Chromosomensträngen, bis mindestens ein Chromosomenstrang, der eine geeignete Lösung für Signalstärkedämpfungskennwerte für den Satz Zellen beinhaltet, gefunden ist.

16. Geostandortssystem gemäß Anspruch 12, wobei die mindestens eine Signalstärkedämpfungskennwertableitungskomponente für Folgendes eingerichtet ist: Speichern der abgeleiteten Signalstärkedämpfungskennwerte innerhalb mindestens einer Datenspeichervorrichtung.

## Revendications

1. Une méthode de détermination d'une géolocalisation d'une unité d'abonné de communication sans fil au sein d'un réseau de communication sans fil ; la méthode comprenant :
la réception d'informations de mesure comprenant des rapports de mesure de cellule, en provenance d'unités d'abonné de communication sans fil au sein d'un réseau de communication sans fil ;
la détermination d'un ensemble de cellules pour lesquelles des valeurs de caractéristique d'atténuation d'intensité de signal doivent être dérivées,
la détermination de l'ensemble de cellules pour lesquelles des valeurs de caractéristique d'atténuation d'intensité de signal doivent être dérivées comprenant :
le fait de prendre une ID de cellule initiale référencée au sein de rapports de mesure de cellule ; et
le fait d'ajouter à l'ID de cellule initiale des ID de cellule supplémentaires référencées au sein des mêmes rapports de mesure que ceux de l'ID de cellule initiale afin de former l'ensemble de cellules pour lesquelles des valeurs de caractéristique d'atténuation d'intensité de signal doivent être dérivées,
les ID de cellule au sein de l'ensemble de cellules étant liées par au moins une ID de cellule commune avec laquelle les ID de cellule sont référencées dans un message de rapport de mesure particulier ;
la génération d'une première génération de chaînes de chromosomes, chaque chaîne de chromosomes comprenant au moins une valeur de caractéristique d'atténuation d'intensité de signal pour chaque cellule au sein de l'ensemble déterminé de cellules ;
le calcul d'une valeur d'adaptation pour chaque chaîne de chromosomes au sein de la première génération de chaînes de chromosomes sur la base au moins en partie d'informations d'intensité de signal pour des mesures d'intensité de signal obtenues par les unités d'abonné de communication sans fil au sein du réseau de communication sans fil ;
la génération d'au moins une génération supplémentaire de chaînes de chromosomes ;
le calcul d'une valeur d'adaptation pour chaque chaîne de chromosomes au sein de l'au moins une génération supplémentaire de chaînes de chromosomes sur la base au moins en partie des informations d'intensité de signal pour les mesures d'intensité de signal obtenues par les unités d'abonné de communication sans fil au sein du réseau de communication sans fil ;
la dérivation des valeurs de caractéristique d'atténuation d'intensité de signal pour l'ensemble de cellules sur la base au moins en partie des valeurs d'adaptation calculées pour la première génération et l'au moins une génération supplémentaire de chaînes de chromosomes ;
la réception d'informations de mesure d'intensité de signal pour l'ensemble de cellules,
les informations de mesure d'intensité de signal étant obtenues par l'unité d'abonné de communication sans fil ;
la récupération des valeurs de caractéristique d'atténuation d'intensité de signal pour l'ensemble de cellules qui ont été dérivées au moyen de l'algorithme génétique sur la base d'informations de mesure reçues en provenance des unités d'abonné de communication sans fil du réseau de communication sans fil,
les valeurs de caractéristique d'atténuation d'intensité de signal incluant des valeurs de pente et d'intercept ;
la détermination d'une distance entre l'unité d'abonné de communication sans fil et une antenne pour chaque cellule au sein de l'ensemble de cellules sur la base :
des valeurs de caractéristique d'atténuation d'intensité de signal pour l'ensemble de cellules, et
des informations de mesure d'intensité de signal reçues pour l'ensemble de cellules au sein du réseau de communication sans fil obtenu par l'unité d'abonné de communication sans fil,
la distance étant déterminée en utilisant un modèle d'intensité de signal généré sur la base de valeurs de distance radiale pour des contours d'intensité de signal relativement à l'antenne,
les valeurs de distance radiale étant dérivées sur la base des valeurs de pente et d'intercept ;
l'obtention de données d'emplacement pour l'antenne pour chaque cellule au sein de l'ensemble de cellules ; et
la détermination d'une géolocalisation de l'unité d'abonné de communication sans fil sur la base :
de la distance déterminée entre l'unité d'abonné de communication sans fil et l'antenne pour chaque cellule au sein de l'ensemble de cellules, et
des données d'emplacement pour l'antenne pour chaque cellule au sein de l'ensemble de cellules.

2. La méthode de la revendication 1, dans laquelle la première génération de chaînes de chromosomes comprend des valeurs de caractéristique d'atténuation d'intensité de signal aléatoires.

3. La méthode de la revendication 1 ou de la revendication 2, dans laquelle le calcul de la valeur d'adaptation pour une chaîne de chromosomes comprend :
la définition d'une pluralité de points de signature, chaque point de signature représentant un emplacement géographique ;
le calcul d'une valeur de mesure d'intensité de signal attendue pour au moins une cellule à chaque point de signature ;
la mise en correspondance de chaque rapport de mesure d'une pluralité de rapports de mesure d'intensité de signal reçus d'unités d'abonné de communication sans fil avec l'un des points de signature sur la base au moins en partie des valeurs de mesure d'intensité de signal attendues pour les points de signature ;
le calcul d'une valeur d'adaptation pour chaque rapport de mesure d'intensité de signal sur la base au moins en partie de chaque valeur de mesure d'intensité de signal attendue pour le point de signature respectif et d'informations d'intensité de signal correspondantes du rapport de mesure d'intensité de signal ; et
le calcul d'une valeur d'adaptation pour la chaîne de chromosomes sur la base au moins en partie des valeurs d'adaptation calculées pour la pluralité de rapports de mesure d'intensité de signal.

4. La méthode de la revendication 3, la méthode comprenant en outre :
le calcul des valeurs d'adaptation pour la chaîne de chromosomes en additionnant les valeurs d'adaptation pour les rapports de mesure d'intensité de signal.

5. La méthode de n'importe lesquelles des revendications 1 à 4, dans laquelle la génération de l'au moins une génération supplémentaire de chaînes de chromosomes comprend :
la dérivation de chaînes de chromosomes parent afin de former une partie de l'au moins une génération supplémentaire de chaînes de chromosomes ; et
la réalisation d'un enjambement entre des chaînes de chromosomes parent afin de générer des chaînes de chromosomes enfant pour former une partie de l'au moins une génération supplémentaire de chaînes de chromosomes.

6. La méthode de la revendication 5, dans laquelle la génération de l'au moins une génération supplémentaire de chaînes de chromosomes comprend en outre : la réalisation d'une mutation des chaînes de chromosomes enfant.

7. La méthode de la revendication 5, dans laquelle la génération de l'au moins une génération supplémentaire de chaînes de chromosomes comprend :
l'identification d'au moins une chaîne de chromosomes d'une génération actuelle de chaînes de chromosomes comprenant une valeur d'adaptation la plus élevée et incluant l'au moins une chaîne de chromosomes identifiée de la génération actuelle de chaînes de chromosomes dans l'au moins une génération supplémentaire de chaînes de chromosomes.

8. La méthode de n'importe lesquelles des revendications 1 à 7, la méthode comprenant en outre :
la génération de générations supplémentaires de chaînes de chromosomes jusqu'à ce qu'au moins une chaîne de chromosomes comprenant une solution adéquate pour des valeurs de caractéristique d'atténuation d'intensité de signal pour l'ensemble de cellules soit trouvée.

9. La méthode de la revendication 8, dans laquelle une chaîne de chromosomes comprenant la solution adéquate pour les valeurs de caractéristique d'atténuation d'intensité de signal pour l'ensemble de cellules est trouvée lorsqu'aucune chaîne de chromosomes dans une génération suivante de chaînes de chromosomes ne comprend une valeur d'adaptation plus élevée que cette chaîne de chromosomes.

10. La méthode de n'importe lesquelles des revendications 1 à 9, la méthode comprenant en outre :
le stockage des valeurs de caractéristique d'atténuation d'intensité de signal dérivées au sein d'au moins un dispositif de stockage de données.

11. Un programme qui, lorsqu'il est exécuté par un ordinateur, amène l'ordinateur à mettre en oeuvre la méthode de n'importe lesquelles des revendications 1 à 10.

12. Un système de géolocalisation comprenant un composant de géolocalisation agencé pour :
recevoir des informations de mesure comprenant des rapports de mesure de cellule, en provenance d'unités d'abonné de communication sans fil au sein d'un réseau de communication sans fil ;
déterminer un ensemble de cellules pour lesquelles des valeurs de caractéristique d'atténuation d'intensité de signal doivent être dérivées,
le composant de géolocalisation, lors de la détermination de l'ensemble de cellules pour lesquelles les valeurs de caractéristique d'atténuation d'intensité de signal doivent être dérivées, étant destiné à :
prendre une ID de cellule initiale référencée au sein de rapports de mesure de cellule ; et
ajouter à l'ID de cellule initiale des ID de cellule supplémentaires référencées au sein des mêmes rapports de mesure que ceux de l'ID de cellule initiale afin de former l'ensemble de cellules pour lesquelles des valeurs de caractéristique d'atténuation d'intensité de signal doivent être dérivées,
les ID de cellule au sein de l'ensemble de cellules étant liées par au moins une ID de cellule commune avec laquelle les ID de cellule sont référencées dans un message de rapport de mesure particulier ;
générer une première génération de chaînes de chromosomes, chaque chaîne de chromosomes comprenant au moins une valeur de caractéristique d'atténuation d'intensité de signal pour chaque cellule au sein de l'ensemble déterminé de cellules ;
calculer une valeur d'adaptation pour chaque chaîne de chromosomes au sein de la première génération de chaînes de chromosomes sur la base au moins en partie d'informations d'intensité de signal pour des mesures d'intensité de signal obtenues par les unités d'abonné de communication sans fil au sein du réseau de communication sans fil ;
générer au moins une génération supplémentaire de chaînes de chromosomes ;
calculer une valeur d'adaptation pour chaque chaîne de chromosomes au sein de l'au moins une génération supplémentaire de chaînes de chromosomes sur la base au moins en partie des informations d'intensité de signal pour les mesures d'intensité de signal obtenues par les unités d'abonné de communication sans fil au sein du réseau de communication sans fil ;
dériver les valeurs de caractéristique d'atténuation d'intensité de signal pour l'ensemble de cellules sur la base au moins en partie des valeurs d'adaptation calculées pour la première génération et l'au moins une génération supplémentaire de chaînes de chromosomes ;
recevoir des informations de mesure d'intensité de signal pour l'ensemble de cellules au sein du réseau de communication sans fil,
les informations de mesure d'intensité de signal étant obtenues par une unité d'abonné de communication sans fil ;
récupérer les valeurs de caractéristique d'atténuation d'intensité de signal pour l'ensemble de cellules qui ont été dérivées au moyen de l'algorithme génétique sur la base d'informations de mesure reçues d'unités d'abonné de communication sans fil du réseau de communication sans fil,
les valeurs de caractéristiques d'atténuation d'intensité de signal incluant des valeurs de pente et d'intercept ;
déterminer une distance entre l'unité d'abonné de communication sans fil et une antenne pour chaque cellule au sein de l'ensemble de cellules sur la base :
des valeurs de caractéristique d'atténuation d'intensité de signal pour l'ensemble de cellules, et
des informations de mesure d'intensité de signal reçues pour l'ensemble de cellules au sein du réseau de communication sans fil obtenu par l'unité d'abonné de communication sans fil,
la distance étant déterminée en utilisant un modèle d'intensité de signal généré sur la base de valeurs de distance radiale pour des contours d'intensité de signal relativement à l'antenne, les valeurs de distance radiale étant dérivées sur la base des valeurs de pente et d'intercept ; et
obtenir des données d'emplacement pour l'antenne pour chaque cellule au sein de l'ensemble de cellules ; et
déterminer une géolocalisation de l'unité d'abonné de communication sans fil sur la base :
de la distance déterminée entre l'unité d'abonné de communication sans fil et l'antenne pour chaque cellule au sein de l'ensemble de cellules, et
des données d'emplacement pour l'antenne pour chaque cellule au sein de l'ensemble de cellules.

13. Le système de géolocalisation de la revendication 12, dans lequel l'au moins un composant de dérivation de valeur de caractéristique d'atténuation d'intensité de signal est agencé pour stocker les valeurs de caractéristique d'atténuation d'intensité de signal dérivées au sein d'au moins un dispositif de stockage de données.

14. Le système de géolocalisation de la revendication 12, dans laquelle la première génération de chaînes de chromosomes comprend des valeurs de caractéristique d'atténuation d'intensité de signal aléatoires.

15. Le système de géolocalisation de la revendication 12, dans lequel l'au moins un composant de dérivation de valeur de caractéristique d'atténuation d'intensité de signal est agencé pour :
générer des générations supplémentaires de chaînes de chromosomes jusqu'à ce qu'au moins une chaîne de chromosomes comprenant une solution adéquate pour des valeurs de caractéristique d'atténuation d'intensité de signal pour l'ensemble de cellules soit trouvée.

16. Le système de géolocalisation de la revendication 12, dans lequel l'au moins un composant de dérivation de valeur de caractéristique d'atténuation d'intensité de signal est agencé pour :
stocker les valeurs de caractéristique d'atténuation d'intensité de signal dérivées au sein d'au moins un dispositif de stockage de données.
